# EUROPEAN PATENT APPLICATION

(11) **EP 4 477 406 A1**
(43) Date of publication of application: **18.12.2024**
(21) Application number: 24158921.7
(22) Date of filing: 21.02.2024
(51) Int. Cl.: B32B 5/02, B32B 27/08, B32B 27/10, B32B 27/12, B32B 27/30, B32B 27/32, B32B 27/36

(54) **PENETRABLE HIGH-PRESSURE LAMINATE PANEL STRUCTURE**

(30) Priority: 12.06.2023 TW 112121824
(71) Applicant: Keding Enterprises Co., Ltd, 241561 New Taipei City (TW)
(72) Inventor: TSAO, HSIEN-CHANG, 241561 New Taipei City (TW)
(74) Representative: Cabinet Chaillot

(57) **Abstract**

A penetrable high-pressure laminate (HPL) panel structure includes a bottom layer, a homochromatic layer and a wear-resistant printing layer. The bottom layer functions as a base. The homochromatic layer is disposed on the bottom layer, and the wear-resistant printing layer is disposed on the homochromatic layer. With the sophisticated structural configuration of the invention, an edge and a panel surface of the penetrable HPL panel are blended into a same color. In addition, the HPL panel has an excellent penetration, thereby achieving a borderless visual effect, so that an overall structure of the HPL panel appears to be more distinct and beautiful.

## Description

### BACKGROUND OF THE INVENTION

### (1) FIELD OF THE INVENTION

The invention relates to a high-pressure laminate (HPL) panel structure, and more particularly to a penetrable HPL panel structure having a sophisticated structural configuration, so that an edge and a panel surface of the penetrable HPL panel are blended into a same color. In addition, the HPL panel has an excellent penetration, thereby achieving a borderless visual effect, so that an overall structure of the HPL panel appears to be more distinct and beautiful.

### (2) DESCRIPTION OF THE PRIOR ART

The HPL panel is one of common materials in the home decoration, and is used in the wall, the ceiling and the kitchen countertop. In addition, the price of the HPL panel is cheaper than that each of the stone and brick, and can imitate textures of marble, solid wood grains and the like through the processing technology.

First, the conventional HPL panel is made of decorative colored paper and kraft paper, which are impregnated with special resin and are stacked in a layer-by-layer manner, and encounters high-temperature and high-pressure processing and processes including drying and the like. Because the HPL panel has various colors and needs not to be painted after adhering, the HPL panel is widely used as surface materials of various door pieces, countertops and the like.

Secondly, the HPL panel has the dirt resistant, scratch resistant and easy-to-clean properties. Because the HPL panel has few surface pores and pits, cannot hide dirt, and can withstand most weak acid and alkali cleaners and contamination of food, the HPL panel has been widely applied to kitchen countertops, tables, chairs, door pieces, cupboards, walls and the like.

Furthermore, there are various choices of the HPL panel. In addition to the single color, the HPL panel further includes wood grains, stone textures, metal textures and the like, and has the prices varying by styles.

In terms of cleaning, the HPL panel has the property of not easily absorbing dirt. However, tools, such as a steel brush, sand paper and the like, which may scratch the panel, need to be avoided, and the acidic cleaner needs to be avoided because the acidic cleaner may erode the surface of the HPL panel, and thus shorten the service lifetime thereof.

However, although the HPL panel has scratch resistant, wear resistant and flame resistant effects after the special surface treatment, it cannot withstand the high temperature and cannot resist the acid and alkali because it is constituted by special resin and paper materials. Special attention is required upon using to prevent the burnt surface caused by the high temperature, wherein the burnt surface is irreversible.

In addition, the adhesive also needs to be chosen carefully. The HPL panel swells easily when being exposed to water. If the liquid adhesive is used during construction, then the wall may become uneven and not tightly connected, and have gaps, and encounter other conditions. Therefore, it is recommended to soak the back side into water before construction to ensure the construction stability. Meanwhile, the harmless, pollution-free and low-formaldehyde adhesive needs to be chosen, and ventilation is required for two months after the construction is completed before living in the room.

To sum up, because the HPL panel has the advantages of durability, diverse styles, and affordable price, it has become a common material for many home decorations. However, like all building materials, attention also needs to be paid upon using, and proper care needs to be made to ensure the durability thereof.

Although the HPL panel has the above-mentioned properties, the edges of the existing HPL panel are black, so that a visible black border becomes too unexpected and unsightly, and the current application range of the HPL panel is limited. Therefore, how to solve the above-mentioned conventional problems and drawbacks is the direction that the present inventor and those skilled in the art want to research and improve urgently.

### SUMMARY OF THE INVENTION

Therefore, the present inventor has collected relevant information, evaluated and considered many parties, and thus developed and designed the present invention according to many years of experience in this filed through continuous trial production and modification.

An objective of the invention is to provide a penetrable high-pressure laminate (HPL) panel, wherein a sophisticated structural configuration is adopted so that an edge and a panel surface of the penetrable HPL panel are blended into a same color. In addition, the HPL panel has an excellent penetration, thereby achieving a borderless visual effect, and an overall structure of the HPL panel appears to be more distinct and beautiful.

To achieve the above-identified or other objectives, a penetrable HPL panel structure of the invention includes a bottom layer, a homochromatic layer and a wear-resistant printing layer. The bottom layer functions as a base. The homochromatic layer is disposed on the bottom layer, and the wear-resistant printing layer is disposed on the homochromatic layer. With the sophisticated structural configuration of the invention, an edge and a panel surface of the penetrable HPL panel are blended into a same color. In addition, the HPL panel has an excellent penetration, thereby achieving a borderless visual effect, so that an overall structure of the HPL panel appears to be more distinct and beautiful.

In one preferred embodiment, a material of the bottom layer includes impregnated bottom paper or non-woven cloth.

In one preferred embodiment, a thickness of the bottom layer ranges between 0.05 mm and 0.3 mm.

In one preferred embodiment, one side of the bottom layer is adhered to a surface by way of rubberizing.

In one preferred embodiment, a material of the homochromatic layer includes polyethylene terephthalate glycol (PETG) or acrylonitrile butadiene styrene (ABS).

In one preferred embodiment, a thickness of the homochromatic layer ranges between 0.2 mm and 0.8 mm.

In one preferred embodiment, a color of the homochromatic layer includes white, black, gray, yellow, red or any other color.

In one preferred embodiment, a material of the wear-resistant printing layer includes polypropylene (PP) or polyvinyl chloride (PVC).

In one preferred embodiment, a thickness of the wear-resistant printing layer ranges between 0.05 mm and 0.2 mm.

In one preferred embodiment, a surface of the wear-resistant printing layer is provided with embossment.

### BRIEF DESCRIPTION OF THE DRAWINGS

FIG. 1 is a pictorial view showing a penetrable HPL panel structure according to a preferred embodiment of the invention.
FIG. 2 is a pictorially exploded view showing the penetrable HPL panel structure according to the preferred embodiment of the invention.
FIG. 3 is a side view showing the penetrable HPL panel structure according to the preferred embodiment of the invention.
FIG. 4 is a schematic view showing first implementation of the penetrable HPL panel structure according to the preferred embodiment of the invention.
FIG. 5 is a schematic view showing second implementation of the penetrable HPL panel structure according to the preferred embodiment of the invention.

### DETAILED DESCRIPTION OF THE PREFERRED EMBODIMENTS

In order to achieve the above-mentioned objectives and effects, the technical means and structures adopted in this invention are described in detail below with reference to drawings of the preferred embodiment of this invention to facilitate a complete understanding to this invention.

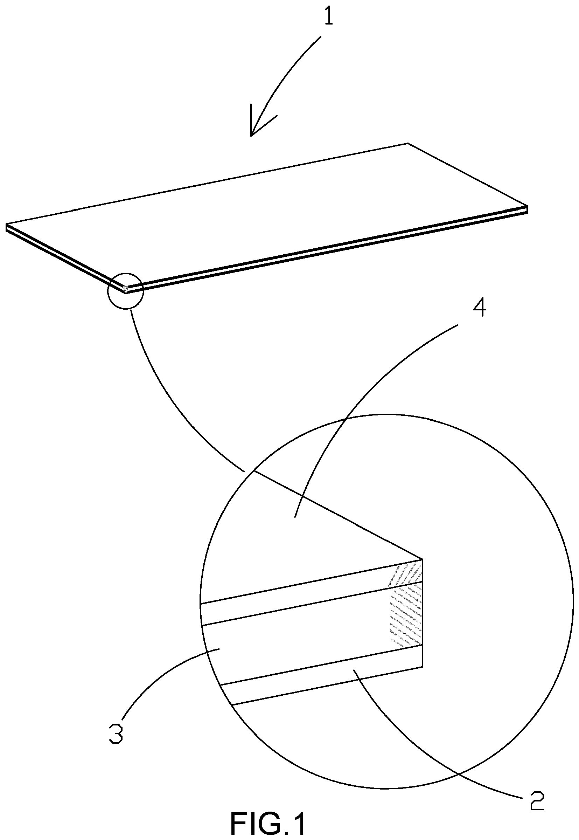

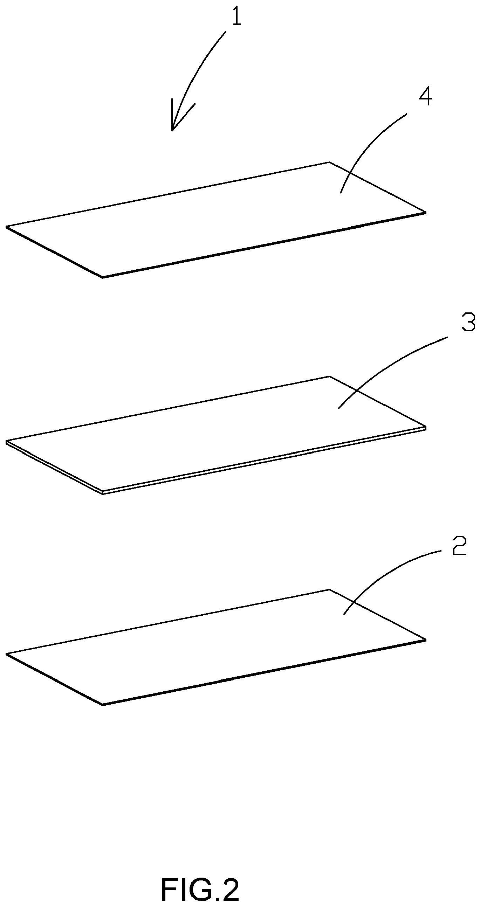

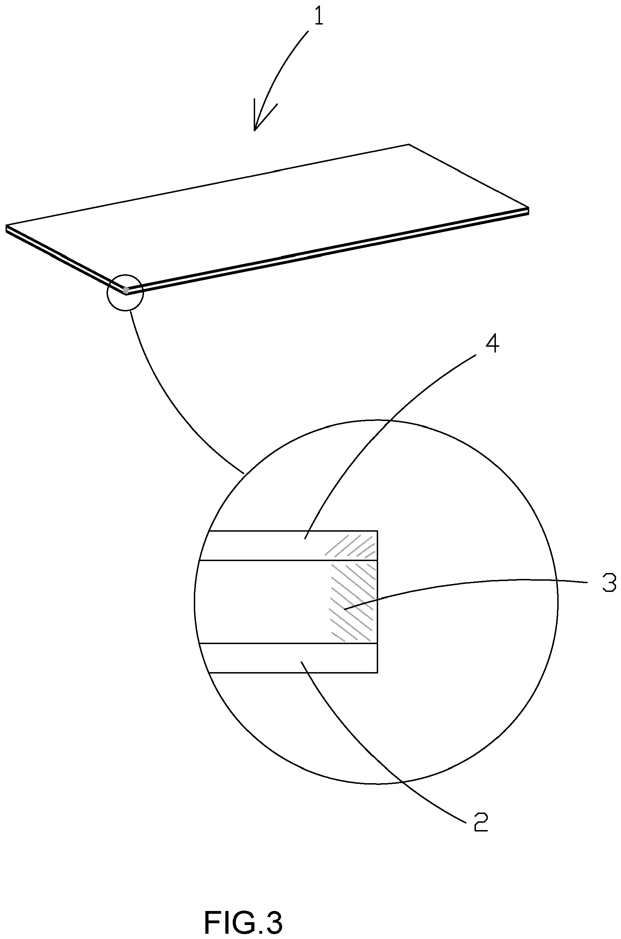

FIGS. 1 to 3 are respectively a pictorial view, a pictorially exploded view and a side view showing a penetrable HPL panel structure according to a preferred embodiment of the invention. Referring to FIGS. 1 to 3, it is clearly seen that the penetrable HPL panel structure 1 of the invention includes a three-layer structure having a bottom layer 2, a homochromatic layer 3 and a wear-resistant printing layer 4.

The bottom layer 2 functions as a base. Preferably, a material of the bottom layer 2 includes impregnated bottom paper or non-woven cloth, a thickness of the bottom layer 2 ranges between 0.05 mm and 0.3 mm, and one side of the bottom layer 2 is adhered to a surface by way of rubberizing. Upon practical application, direct rubberizing construction can be performed on site to enhance the construction convenience.

The homochromatic layer 3 is disposed on the bottom layer 2. Preferably, a material of the homochromatic layer 3 includes polyethylene terephthalate glycol (PETG) or acrylonitrile butadiene styrene(ABS), a thickness of the homochromatic layer 3 ranges between 0.2 mm and 0.8 mm, and a color of the homochromatic layer 3 includes white, black, gray, yellow or red, but the color is not limited thereto. Upon practical application, PETG or ABS has one single color (may be white, black, gray, yellow, red or any other color), and the color is the same as or similar to the color of the wear-resistant printing layer 4.

The wear-resistant printing layer 4 is disposed on the homochromatic layer 3. Preferably, a material of the wear-resistant printing layer 4 includes polypropylene (PP) or polyvinyl chloride (PVC), a thickness of the wear-resistant printing layer 4 ranges between 0.05 mm and 0.2 mm, and a surface of the wear-resistant printing layer 4 is provided with embossment. Furthermore, the wear-resistant printing layer 4 has the wear resistant and flame resistant effects. Upon practical application, highly realistic wood grain textures can be printed in conjunction with the surface embossment to enhance the wood feel of the solid wood.

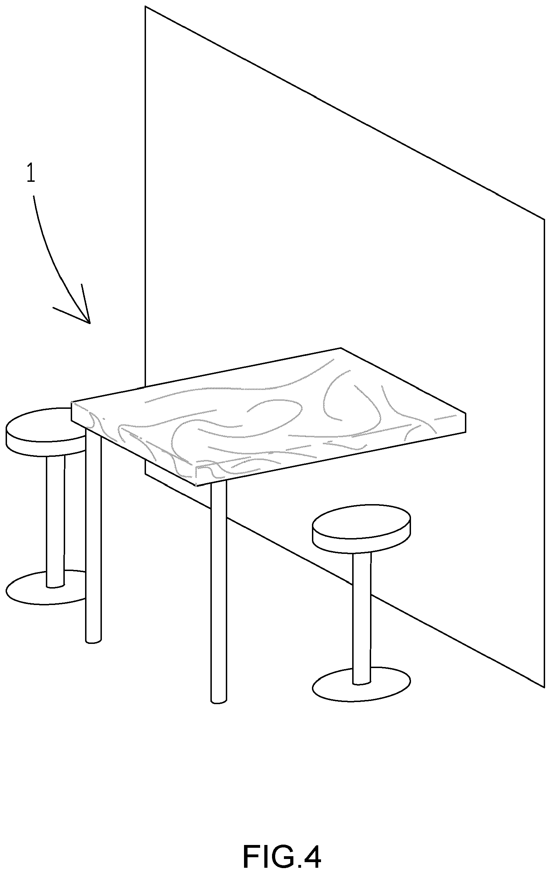

With the above-mentioned structure, composition and configuration, the applications of the invention will be described in the following. FIG. 4 is a schematic view showing first implementation of the penetrable HPL panel structure according to the preferred embodiment of the invention. Referring to FIG. 4, it is clearly seen that the penetrable HPL panel structure of the invention can be mounted on a plane location having a desktop, a countertop, or a cabinet, for example, in the interior decoration. Because the edge and the panel surface of the penetrable HPL panel structure of the invention have the same color system, its penetrability is high. Therefore, the borderless feel of the overall visual effect is obtained. Compared with the prior art, the invention is more natural and beautiful.

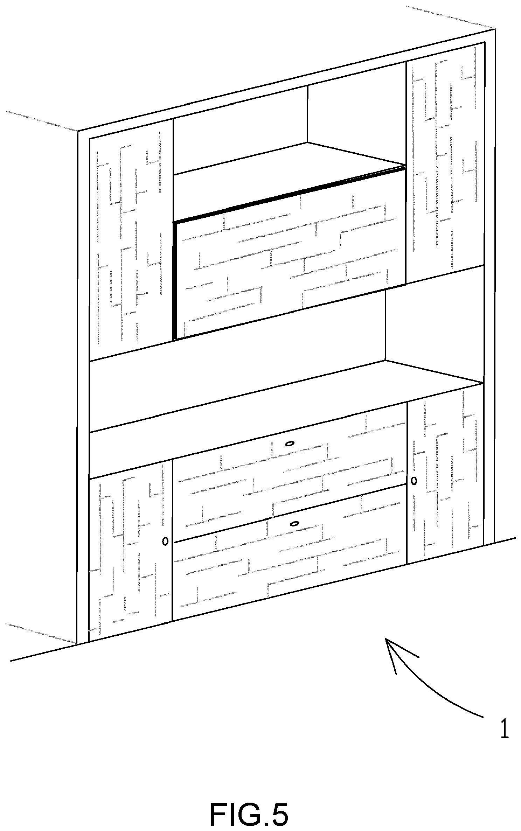

FIG. 5 is a schematic view showing second implementation of the penetrable HPL panel structure according to the preferred embodiment of the invention. Referring to FIG. 5, it is clearly seen that the penetrable HPL panel structure of the invention may also be used on any furniture, such as the vertical surface of the object including a table, chair, counter, bar counter, cupboard, door piece, kitchen sink, wall surface and the like. As shown in FIG. 5, the HPL panel structure is applied to the cupboard to achieve the excellent natural and beautiful effect.

It is necessary to specify that the invention is an optimized penetrable HPL panel structure, wherein the penetrable property represents that the color penetrates through the outer surface or the color extends to the center. That is, the color of the wear-resistant printing layer 4 of the panel surface is similar to the color of the homochromatic layer 3. The penetrable HPL panel structure of the invention has the following uses and advantages.

First, the aesthetics is obtained. The printing textures of the highly realistic wood grain, stone texture, cloth texture and the like collocate with the homochromatic layer 3, so that the cross-section color of the product is closer to the real material, and the hardness of the wear-resistant printing layer 4 is also incorporated to obtain the texture touch feel on the surface of the wear-resistant printing layer 4. Thus, the weather resistant property is added to the material, the whitening is reduced, and the simulation degrees of the visual and touch feels are also significantly enhanced.

Second, the convenience is obtained. The bottom layer 2 is made of the impregnated bottom paper or non-woven cloth material, can be rolled up like a sheet upon transportation, and has the extremely light weight. So, it is unnecessary to occupy a large carrying space and expend a lot of efforts. During the on-site construction, it is compatible with more adhesives, and only one of the adhesives needs to be applied. So, it is time-saving and can be operated easily, it is more convenient upon furnishing, and the time and cost can be saved.

Third, the utility is obtained. After the layers have been combined, the product becomes highly flexible, and can be easily adhered to various curved surfaces or irregular surfaces including concave surfaces, convex surfaces and curved surfaces used indoor or outdoor, so that the construction is not restricted, the price is affordable, the willingness of use is increased, and the decoration practicality is improved.

So, referring to all the drawings, the invention in use indeed has the following advantages when compared with the prior art. The penetrable HPL panel structure of the invention has the sophisticated structural configuration, so that the edge and the panel surface of the penetrable HPL panel are blended into the same color. In addition, the HPL panel has the excellent penetration, thereby achieving the borderless visual effect, so that the overall structure of the HPL panel appears to be more distinct and beautiful.

However, the descriptions are made with reference to only the preferred embodiment of the invention without limiting the claims of the invention. Therefore, any simple modifications and equivalent structural changes made according to the descriptions and drawings of the invention are still deemed as falling within the scope of the invention.

## Claims

1. A penetrable high-pressure laminate (HPL) panel structure, comprising:
a bottom layer functioning as a base;
a homochromatic layer disposed on the bottom layer; and
a wear-resistant printing layer disposed on the homochromatic layer.

2. The penetrable HPL panel structure according to claim 1, wherein a material of the bottom layer includes impregnated bottom paper or non-woven cloth.

3. The penetrable HPL panel structure according to claim 1, wherein a thickness of the bottom layer ranges between 0.05 mm and 0.3 mm.

4. The penetrable HPL panel structure according to claim 1, wherein one side of the bottom layer is adhered to a surface by way of rubberizing.

5. The penetrable HPL panel structure according to claim 1, wherein a material of the homochromatic layer includes polyethylene terephthalate glycol (PETG) or acrylonitrile butadiene styrene (ABS).

6. The penetrable HPL panel structure according to claim 1, wherein a thickness of the homochromatic layer ranges between 0.2 mm and 0.8 mm.

7. The penetrable HPL panel structure according to claim 1, wherein a color of the homochromatic layer includes white, black, gray, yellow or red.

8. The penetrable HPL panel structure according to claim 1, wherein a material of the wear-resistant printing layer includes polypropylene (PP) or polyvinyl chloride (PVC).

9. The penetrable HPL panel structure according to claim 1, wherein a thickness of the wear-resistant printing layer ranges between 0.05 mm and 0.2 mm.

10. The penetrable HPL panel structure according to claim 1, wherein a surface of the wear-resistant printing layer is provided with embossment.
